# EUROPÄISCHE PATENTSCHRIFT

(11) **EP 3 127 596 B1**
(45) Veröffentlichungstag und Bekanntmachung des Hinweises auf die Patenterteilung: **13.06.2018**
(21) Anmeldenummer: 16178939.1
(22) Anmeldetag: 12.07.2016
(51) Int. Cl.: B01D 41/04, F01N 3/023

(54) **DIESELPARTIKELFILTER-REINIGUNGSVERFAHREN**
DIESEL PARTICULE FILTER CLEANING METHOD
PROCÉDÉ DE NETTOYAGE DE FILTRE À PARTICULES DIESEL

(30) Priorität: 06.08.2015 DE 102015112939
(43) Veröffentlichungstag der Anmeldung: 08.02.2017
(73) Patentinhaber: Mack GmbH, 74535 Mainhardt (DE)
(72) Erfinder: Dietrich, Marco, 74523 Schwäbisch-Hall (DE); Mack, Walter Dieter, 74535 Mainhardt (DE)
(74) Vertreter: Witte, Weller & Partner Patentanwälte mbB

(56) Entgegenhaltungen:
- EP-A1- 2 270 319
- EP-A1- 2 415 982
- EP-B1- 2 459 853
- WO-A1-02/094415
- JP-A- 2014 195 759

## Beschreibung

Die vorliegende Erfindung betrifft ein Verfahren zum Reinigen einer Filteranordnung, die einen ersten Fluidanschluss, einen zweiten Fluidanschluss und eine Filtereinrichtung aufweist, die zwischen dem ersten und dem zweiten Fluidanschluss angeordnet ist und eine Oberfläche hat, an der Verunreinigungen anhaften können.

Insbesondere betrifft die vorliegende Erfindung ein Verfahren zum Reinigen eines Dieselpartikelfilter, und zwar insbesondere im ausgebauten Zustand.

Dieselpartikelfilter (DPF) dienen dazu, die von einem Dieselmotor emittierten Rußpartikel aus dem Abgas zu entfernern. Bei solchen Partikelfiltern unterscheidet man zwischen geschlossenen und offenen Systemen. Geschlossene Partikelfilter besitzen in der Regel einen Wabenkörper aus einer Keramik, der eine große Anzahl von parallelen Kanälen aufweist. Benachbarte Kanäle sind an jeweils gegenüberliegenden Seiten verschlossen, so dass Abgas durch die porösen Keramikwände hindurchströmen muss.

Offene Partikelfilter ermöglichen hingegen, dass ein Teil des Abgases ungefiltert an einer Filterwand vorbeiströmt.

Partikelfilter werden regelmäßig regeneriert. Die Regeneration erfolgt durch Abbrennen des gesammelten Rußes im Filter. Ein solches Regenerieren wird bedarfsweise bei Nennleistungsbetrieb des Dieselmotors für einen gewissen Zeitraum durchgeführt.

Trotz dieser Regenerationszyklen ist es nach einer gewissen Laufleistung häufig erforderlich, den Partikelfilter mechanisch zu reinigen, wozu der Filter ausgebaut wird (beispielsweise alle 120.000 km).

Zum Reinigen von ausgebauten Partikelfiltern sind verschiedene Verfahren bekannt. Beispielsweise offenbart das Dokument DE 295 19 922 U1 eine Vorrichtung zum Regenerieren von Filterelementen außerhalb eines Abscheiders, wobei die Filterelemente durch Druckluftimpulse gereinigt werden. Der abgereinigte Staub fällt über einen Staubsammelraum in einen Staubsammelbehälter.

Das Dokument DE 600 37 220 T2 offenbart ein Verfahren, bei dem abwechselnd eine Reinigungsphase, in deren Verlauf durch den Filterträger eines Filters eine Reinigungsflüssigkeit unter Druck strömt, und eine Austriebs- und/oder Trocknungsphase durchgeführt werden, in der durch den Filterträger ein Gas unter Druck wie Druckluft strömen kann. Die Dauer der Reinigungsphase kann dabei zwischen einer und einigen Minuten liegen.

Aus dem Dokument DE 10 2010 036 928 A1 ist es bekannt, Filter durch Abstrahlen mit einem Strahlmedium zu reinigen, wobei das Strahlmedium gasförmig ist und festes oder flüssiges Strahlmittel mit einem Siedepunkt von nicht mehr als 120°C enthält, wobei das Strahlmedium so beschleunigt wird, dass es mit annähernd Schallgeschwindigkeit auf den Filter trifft und beim Verlassen der Strahldüse eine mittlere Temperatur von weniger als 0°C hat.

Aus dem Dokument DE 60 2004 002 695 T2 ist es bekannt, Filterbauteile einer Atmosphäre von überhitztem Dampf bei einem Druck von wenigstens 0,5 bar in einem Behälter zu unterwerfen, und den Behälter anschließend zu dekomprimieren.

Das Dokument EP 1 302 232 B1 schlägt vor, ein Filter in einer Reinigungsflüssigkeit einzuweichen. Ferner ist aus dem Dokument WO 02/094415 A1 ein Verfahren zum Reinigen eines Partikelfilters bekannt, wobei man durch den Partikelfilter eine Reinigungsströmung zirkulieren lässt, die aus einer Mischung von Flüssigkeit und Gas besteht. Das Gas und die Flüssigkeit werden dabei in einem Mischer vermischt. Das Verhältnis von Flüssigkeitsvolumen zu Gasvolumen soll zwischen 1/5 und 1/10 liegen. Somit wird eine Strömung einer Flüssigkeit geschaffen, die Blasen mit einem Durchmesser in einem Bereich zwischen 0,1 mm und 0,6 mm enthält, und zwar mit einer Strömungsgeschwindigkeit von mehr als 100 l/min. Der Reinigungsprozess dauert vorteilhafterweise 5 s bis 15 s.

Das Dokument WO 2004/073835 A1 schlägt vor, ein Filter innerhalb eines Behälter mit Reinigungsflüssigkeit zu verschwenken, um Flüssigkeit hin- und herströmen zu lassen.

Ferner offenbart das Dokument WO 2006/096244 A1 ein Verfahren, bei dem Rückstände in einem Dieselpartikelfilter durch Verbrennung beseitigt werden. Das Dokument WO 2008/042371 A1 schlägt vor, Ascheablagerungen mit einer Säurezusammensetzung in Kontakt zu bringen. Ferner ist es aus der WO 2009/032175 A1 bekannt, Druckluft durch Düsenelemente auf einer Seite in ein Filter einzublasen, wobei die Düsenelemente quer zu der Filteroberfläche bewegt werden. Ferner ist es aus dem Dokument WO 2015/054771 A1 bekannt, ein Filter in ein Ultraschallbad einzulegen, um Verschmutzungen von einem Filter zu lösen.

Schließlich ist aus dem Dokument EP 2 459 853 B1 ein Reinigungsverfahren für Fahrzeugabgasfilter bekannt, wobei ein Filter, der ein erstes und ein zweites Ende und mehrere längliche Kanäle aufweist, mit der Unterseite einer Kammer verbunden wird, so dass deren Auslass mit dem ersten Ende des Filters in Fluidverbindung steht. Anschließend wird das untere Ende des Filters abgedeckt. Anschließend wird Flüssigkeit in den Filter eingefüllt, und zwar oben über die Kammer, derart, dass der Filter und die Kammer im Wesentlichen mit Flüssigkeit gefüllt sind. Anschließend wird ein Druckgasimpuls in die Kammer eingeleitet. Am zweiten Ende des Filters wird der Druck gemessen, und das zweite Ende des Filters wird nur dann freigelegt, wenn ein vorgegebener Schwellendruck gemessen wurde, um zu ermöglichen, dass das Gas den Schmutz und die Flüssigkeit aus dem zweiten Ende des Filters herausdrückt.

Das Dokument EP 2 415 982 A1 offenbart ein Verfahren zur Regeneration eines Partikelfilters unter Verwendung einer wässrigen Mischung, die ein Oxidationsreaktionsmittel beinhaltet. In einem Verneblungsschritt wird die Mischung auf das Partikelfilter angewendet, wobei die Mischung das Partikelfilter in flüssiger Form als Tropfen erreicht, die einen mittleren Durchmesser von weniger als 500 µm haben.

Die bekannten Verfahren erfordern entweder aufwendige Apparaturen oder erfordern einen hohen Energieeintrag. Ferner ist die Taktdauer zum vollständigen Reinigen eines Partikelfilters häufig relativ hoch.

Vor diesem Hintergrund ist es eine Aufgabe der Erfindung, ein verbessertes Verfahren zum Reinigen einer Filteranordnung anzugeben.

Die obige Aufgabe wird gelöst durch ein Verfahren zum Reinigen einer Filteranordnung, die einen ersten Fluidanschluss, einen zweiten Fluidanschluss und eine Filtereinrichtung aufweist, die zwischen dem ersten und dem zweiten Fluidanschluss angeordnet ist und eine Oberfläche hat, an der Verunreinigungen anhaften können, wobei das Verfahren die Schritte aufweist, den ersten Fluidanschluss mit einer Blaskammer zu verbinden, die einen Gasanschluss aufweist, die Blaskammer zumindest teilweise mit einer Flüssigkeit zu befüllen, und einen Reinigungsimpuls zu erzeugen, bei dem Gas unter Druck über den Gasanschluss in die Blaskammer geleitet wird, und zwar für eine erste Zeitdauer, die kleiner ist als 0,5 s, so dass ein Gas-Flüssigkeitsgemisch über den ersten Fluidanschluss durch die Filtereinrichtung hindurch und aus dem zweiten Fluidanschluss heraus getrieben wird.

Mittels des erfindungsgemäßen Verfahrens wird eine hervorragende Reinigungswirkung erzielt, und zwar bei geringem Energieaufwand und bei einem einfachen apparativen Aufbau.

Die überraschend gute Wirkung des Reinigungsimpulses lässt sich möglicherweise folgendermaßen beschreiben, ohne hierdurch jedoch eine Einschränkung auf die Erläuterungen vornehmen zu wollen. Das schlagartige Einströmen des Gases in die Blaskammer hat zur Folge, dass die darin enthaltene Flüssigkeit aufgewirbelt und ggf. sogar zerstäubt wird. Das Gas-Flüssigkeitsgemisch wird anschließend unter Druck durch die Filtereinrichtung getrieben. Es wird angenommen, dass die Flüssigkeitstropfen, die in diesem Gemisch enthalten sind, mechanisch auf die Verunreinigungen so einwirken, dass sie diese mitnehmen, auch wenn die Verunreinigungen an der Filtereinrichtung anhaften. Mit anderen Worten wird von den Flüssigkeitstropfen eine mechanische bzw. kinetische Energie auf die Verunreinigungen ausgeübt,

Wie gesagt, stellt die obige Erläuterung einen Erklärungsversuch dar, auf den die Erfindung jedoch nicht zu beschränken ist.

Das Verbinden des ersten Fluidanschlusses mit der Blaskammer erfolgt vorzugsweise fluiddicht. Die Blaskammer ist vorzugsweise eine stationäre Blaskammer, die Teil der Reinigungsvorrichtung bilden kann und an der jeweils eine Filteranordnung festgelegt wird, um an dieser einen Reinigungsprozess durchzuführen.

Sofern vorliegend von einem Gas unter Druck gesprochen wird, so ist damit gemeint, dass der Druck des Gases größer ist als der atmosphärische Druck, also insbesondere größer ist als 1 bar.

Vorzugsweise ist der Gasdruck vor dem Einleiten in die Blaskammer größer als 2 bar, vorzugsweise größer als 4 bar, und insbesondere größer als 7 bar. Vorzugsweise ist der Gasdruck kleiner als 15 bar. Ferner kann der Gasdruck so eingestellt sein, dass der Druck in der Blaskammer während des Reinigungsimpulses in einem Bereich von größer 1 bar bis 3 bar liegt. Andere Druckwerte sind natürlich möglich, insbesondere in Abhängigkeit von den Gegebenheiten. Die obenliegenden Werte beziehen sich insbesondere auf ein Dieselpartikelfilter für Nutzfahrzeuge, das beispielsweise einen Durchmesser von ca. 40 cm besitzt und eine axiale Länge von beispielsweise 50 cm. Diese Werte sollen jedoch reine Anhaltswerte sein, um die Erfindung leichter erläutern zu können.

Die erste Zeitdauer, für die Gas unter Druck über den Gasanschluss in die Blaskammer geleitet wird, ist vorzugsweise kleiner als 3 s, insbesondere kleiner als 2 s, und liegt vorzugweise in einem Bereich von 1,5 s bis 0,5 s. Auch diese und alle folgenden Angaben beziehen sich dabei vorzugsweise auf eine Reinigung eines Nutzfahrzeug-DPF.

Das Gas und die Flüssigkeit sind vorzugsweise nicht vorerwärmt, so dass die aufzuwendende Energie vergleichsweise gering ist.

Das Gas kann beispielsweise Luft sein.

Die Flüssigkeit kann Wasser sein, insbesondere voll entsalztes Wasser (VE-Wasser), dem vorzugsweise ein Reinigungsadditiv hinzugefügt ist, und zwar vorzugsweise in einem Bereich von 0,1 Vol.-% bis 5 Vol.-%.

Das Verhältnis des Volumens der Blaskammer zu dem Volumen der Filteranordnung liegt vorzugsweise in einem Bereich von 1:4 bis 1:1.

Erfindungsgemäß wird die Filteranordnung so an der Blaskammer angebracht wird, dass die Filteranordnung in vertikaler Richtung wenigstens teilweise über der Blaskammer angeordnet ist.

In diesem Fall kann die in der Blaskammer enthaltene Flüssigkeit bis zum Einleiten des Gases allein aufgrund von Gravitationskräften in der Blaskammer verbleiben.

Der Gasanschluss liegt vorzugsweise in axialer Richtung gesehen auf einer dem ersten Fluidanschluss gegenüberliegenden Seite der Blaskammer. Der Gasanschluss ist erfindungsgemäß so angeordnet, dass das in die Blaskammer eintretende Gas zwangsweise durch die darin enthaltene Flüssigkeit hindurchgeführt wird. Das Gas wird dabei vorzugsweise von unten entgegen der Gravitation nach oben in die Blaskammer eingeblasen.

Die Blaskammer kann vollständig mit Flüssigkeit gefüllt sein. Besonders bevorzugt ist es jedoch, wenn zwischen einer Oberfläche der in der Blaskammer enthaltenen Flüssigkeit und dem ersten Fluidanschluss ein Abstand eingerichtet ist, der vorzugsweise größer ist als 0,5 cm, insbesondere größer ist als 2 cm, und vorzugsweise kleiner ist als 50 cm, insbesondere kleiner als 25 cm.

Eine Längsachse der Reinigungsanordnung kann entweder genau vertikal ausgerichtet sein, kann jedoch auch gegenüber der Vertikalen um einen Winkel geneigt sein, der im Bereich von 1° bis 90° liegen kann, jedoch vorzugsweise kleiner ist als 90°, insbesondere kleiner ist als 60°.

Die Neigung ist vorzugsweise so auf die Form der Blaskammer und das Volumen der darin enthaltenen Flüssigkeit abgestimmt, dass vorzugsweise keine Flüssigkeit in die Filtereinrichtung eintritt, bevor der Reinigungsimpuls eingeleitet wird.

In einer alternativen Variante kann jedoch die Flüssigkeit auch bis zu einem Niveau eingeführt werden, bei dem zumindest ein Teil der Filtereinrichtung von der Flüssigkeit Wasser benetzt ist, so dass das Niveau der Flüssigkeit über den ersten Fluidanschluss hinaus ansteigt.

Die Filteranordnung kann insbesondere eine Dieselpartikelfilteranordnung sein, insbesondere vom sogenannten geschlossenen Typ. Hierbei sind benachbarte Kanäle eines keramischen Wabenkörpers an jeweils gegenüberliegenden Seiten durch Stopfen verschlossen, so dass das Gas-Flüssigkeitsgemisch durch die porösen Keramikwände hindurchströmen muss. Der Dieselpartikelfilter kann jedoch auch als offener Partikelfilter ausgebildet sein.

Der Dieselpartikelfilter kann in Kraftfahrzeugen eingebaut werden, wie Nutzfahrzeugen, Personenkraftwagen und dergleichen, kann jedoch auch in den Antriebsstrang von Booten, von Schiffen, von Lokomotiven, etc. integriert werden.

Die Aufgabe wird somit vollkommen gelöst.

Bei dem erfindungsgemäßen Verfahren, ist der zweite Fluidanschluss offen, so dass das aus dem zweiten Fluidanschluss austretende Gas-Flüssigkeitsgemisch im Wesentlichen ungehindert aus der Filtereinrichtung austreten kann.

Unter einem offenen zweiten Fluidanschluss wird insbesondere verstanden, dass dieser während des Reinigungsimpulses nicht abgedeckt ist. Vorzugsweise ist ein Abstand zwischen dem zweiten Fluidanschluss und einer quer hierzu verlaufenden Fläche während des Reinigungsimpulses größer als 0,5 m, insbesondere größer als 1,5 m.

Das Volumen der Auffangkammer kann insbesondere größer sein als ein halbes Volumen des bei dem Reinigungsimpuls verwendeten Gasvolumens, wenn dieses entspannt (also nicht unter Druck) ist. Insbesondere kann das Volumen der Auffangkammer größer gleich diesem Volumen sein.

Vorliegend sind alle Angaben von Volumina bezogen auf einen Umgebungsdruck von 1 bar und einer Umgebungstemperatur von 20°C, sofern nichts anderes erwähnt ist.

Bei Verwendung einer Auffangkammer kann die aus der Filtereinrichtung austretende Gas-Flüssigkeitsmischung, die mit Verunreinigungen aus der Filtereinrichtung verunreinigt ist, aufgefangen werden, um anschließend geeignet aufbereitet werden zu können.

Gemäß einem weiteren bevorzugten Ausführungsbeispiel liegt ein Verhältnis zwischen einem Gasvolumen des bei dem Reinigungsimpuls verwendeten Gases und einem Flüssigkeitsvolumen der bei dem Reinigungsimpuls verwendeten Flüssigkeit in einem Bereich zwischen 20:1 und 4000:1. Besonders bevorzugt ist es, wenn dieses Verhältnis größer ist als 150:1, insbesondere größer als ist als 200:1. Vorzugsweise ist dieses Verhältnis kleiner als 1000:1 und insbesondere kleiner als 500:1.

Hieraus ergibt sich, dass das Gas-Flüssigkeitsgemisch ein relativ großes Volumen Gas enthält, in dem eine relativ kleine Menge an Flüssigkeit aufgenommen ist. Im Gegensatz zu bekannten Verfahren, bei denen in einer Flüssigkeit Gasblasen enthalten sind, muss man sich das vorliegende Gas-Flüssigkeitsgemisch vorzugsweise so vorstellen, als wäre es ein Gas, das von Tropfen durchsetzt ist.

In vielen Fällen ist es hinreichend, wenn der Reinigungsimpuls ein einziges Mal durchgeführt wird.

Besonders bevorzugt ist es jedoch, wenn ein solcher Reinigungsimpuls nacheinander bis zu viermal durchgeführt wird, also bevor eine Trocknung erfolgt.

Gemäß einer weiteren bevorzugten Ausführungsform wird nach dem Reinigungsimpuls oder nach den Reinigungsimpulsen wenigstens ein Trocknungsimpuls erzeugt, wobei Gas unter Druck in die Filtereinrichtung geleitet wird, und zwar für eine zweite Zeitdauer, die kleiner ist als 10 s, so dass Gas durch die Filtereinrichtung hindurchgetrieben wird.

Mit dem Trocknungsimpuls wird erreicht, dass in der Filtereinrichtung nach dem Reinigungsimpuls verbleibende Flüssigkeit zu einem großen Teil herausgetrieben wird.

Die zweite Zeitdauer ist vorzugsweise länger als die erste Zeitdauer, und ist vorzugsweise kleiner als 5 s, insbesondere kleiner als 3 s.

Generell ist es denkbar, dass das Gas bei dem Trocknungsimpuls entgegen der Strömungsrichtung der Gas-Flüssigkeitsmischung durch die Filtereinrichtung getrieben wird. Besonders bevorzugt ist es jedoch, wenn dies in der gleichen Strömungsrichtung erfolgt, so dass das Gas durch die Blaskammer und den ersten Fluidanschluss hindurch in die Fluideinrichtung getrieben wird.

Besonders bevorzugt ist es, wenn der Trocknungsimpuls nacheinander ein- bis sechsmal durchgeführt wird.

Ferner ist es vorteilhaft, wenn die Filteranordnung nach dem Reinigen, d.h. nach der Durchführung des Reinigungsimpulses und vorzugsweise nach Durchführen eines Trocknungsimpulses, in einem Ofen getrocknet wird.

Die Trocknung in dem Ofen kann den Trocknungsimpulsschritt ersetzen oder zusätzlich hierzu durchgeführt werden. Bevorzugt ist es, wenn die Trocknung erfolgt, nachdem der Trocknungsimpuls erzeugt worden ist und nachdem die Filteranordnung von der Blaskammer demontiert worden ist. Anschließend wird die Filteranordnung in den Ofen eingelegt, und in diesem getrocknet, insbesondere in einem Temperaturbereich zwischen 50°C und 250°C. Der Ofen ist vorzugsweise ein Durchlaufofen, so dass die Filteranordnungen auf einer Seite auf ein Fördermittel eingegeben werden, anschließend den Durchlaufofen durchlaufen und am anderen Ende vollkommen getrocknet entnommen werden können.

Schließlich ist es vorteilhaft, wenn das mit gelösten Verunreinigungen verunreinigte Gas-Flüssigkeitsgemisch in einer Auffangkammer aufgefangen wird, wie bereits oben erwähnt.

Die Auffangkammer hat vorzugsweise ein Volumen, das größer gleich dem Volumen des bei dem Reinigungsimpuls verwendeten Gases ist, ggf. jedoch auch kleiner ist. In manchen Fällen kann die Auffangkammer eine elastisch erweiterbare Volumenerweiterungsblase oder dergleichen aufweisen, um zu erreichen, dass dem Eintreten des Gas-Flüssigkeitsgemisches in die Auffangkammer möglichst wenig Gegendruck entgegenwirkt.

In der Auffangkammer kann ein Tropfenabscheider angeordnet sein.

Ferner ist es vorteilhaft, wenn die Auffangkammer eine Abscheidungseinrichtung aufweist, die dazu ausgebildet ist, ein Zurückströmen des verunreinigten Gas-Flüssigkeitsgemisches in die Filtereinrichtung hinein zu verringern oder zu verhindern.

Diese Abscheidungseinrichtung kann durch eine Klappe ausgebildet sein, die nach dem Austritt des Gas-Flüssigkeitsgemisches über den zweiten Fluidanschluss verschwenkt oder verschoben wird, um ein Zurückströmen zu verhindern. Die Abscheidungseinrichtung kann jedoch auch durch passive Einrichtungen gebildet sein, wie beispielsweise einen siphonartigen Verlauf einer Verbindung des zweiten Fluidanschlusses mit der Auffangkammer, oder durch ein Schrägstellen der Blaskammer und der daran montierten Filteranordnung.

Insgesamt ist es vorteilhaft, wenn das bei dem Reinigungsimpuls verwendete Flüssigkeitsvolumen kleiner ist als das Volumen der Filteranordnung.

Folglich kann die Menge der bei jedem Reinigungsimpuls anfallenden verunreinigten Flüssigkeit relativ gering sein, so dass auch die Entsorgung bzw. Aufbereitung mit geringem Aufwand betrieben werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer ersten Ausführungsform einer Reinigungsvorrichtung zur Durchführung des erfindungsgemäßen Reinigungsverfahrens;
- Fig. 2: eine weitere Ausführungsform einer Reinigungsvorrichtung;
- Fig. 3: eine weitere Ausführungsform einer Reinigungsvorrichtung;
- Fig. 4: eine weitere Ausführungsform einer Reinigungsvorrichtung;
- Fig. 5: eine weitere Ausführungsform einer Reinigungsvorrichtung;
- Fig. 6: eine weitere Ausführungsform einer Reinigungsvorrichtung;
- Fig. 7: eine weitere Ausführungsform einer Reinigungsvorrichtung;
- Fig. 8: ein beispielhaftes Flussdiagramm zum Durchführen des Verfahrens; und
- Fig. 9: eine schematische Draufsicht auf eine Reinigungsanlage, die eine Reinigungsvorrichtung beinhaltet.

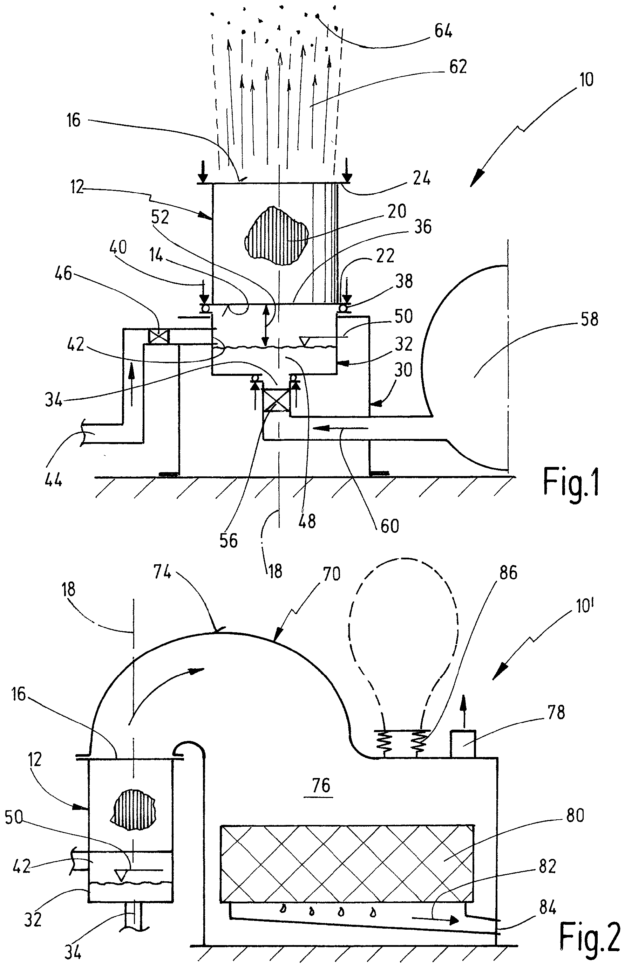

In Fig. 1 ist eine Filterreinigungsvorrichtung schematisch dargestellt und generell mit 10 bezeichnet.

Die Filterreinigungsvorrichtung 10 dient zur Reinigung bzw. Regeneration von Filteranordnungen 12, von denen eine in Fig. 1 dargestellt ist. Die Filteranordnung kann insbesondere ein Dieselpartikelfilter sein, insbesondere ein Dieselpartikelfilter vom sogenannten geschlossenen Typ bzw. vom Typ "Wandstromfilter". Die Filteranordnung 12 kann jedoch auch eine andere Art von zu reinigendem Gegenstand sein, der insbesondere eine Vielzahl von länglichen Kanälen aufweist, durch die hindurch ein Gas und/oder eine Flüssigkeit strömen können.

Die Filteranordnung 12 weist einen ersten Anschluss 14 an einem ersten axialen Ende und einen zweiten Anschluss 16 an einem zweiten axialen Ende auf. Die Filteranordnung 12 ist im Wesentlichen rotationssymmetrisch ausgebildet, und zwar entlang einer Längsachse 18. Die Filteranordnung 12 weist einen zylindrischen Mantel auf, der vorzugsweise aus Metall hergestellt ist. Die Zylinderenden bilden den ersten und den zweiten Anschluss 14, 16. Im Inneren der Filteranordnung 12 ist eine Filtereinrichtung 20 angeordnet. Die Filtereinrichtung 20 kann insbesondere eine poröse Keramikstruktur mit Längskanälen sein, wie es in Fig. 1 schematisch angedeutet ist.

Im Bereich des ersten Anschlusses 14 weist die Filteranordnung 12 einen ersten Flansch 22 auf. Im Bereich des zweiten Anschlusses 16 weist die Filteranordnung 12 einen zweiten Flansch 24 auf.

Die Filterreinigungsvorrichtung 10 beinhaltet ein Gestell 30, das auf einem Boden stehen kann. An dem Gestell 30 ist eine Blaskammer 32 festgelegt. Die Blaskammer 32 weist an einer Unterseite einen Gasanschluss 34 auf, der vorzugsweise konzentrisch zu der Längsachse 18 angeordnet ist. Der Gasanschluss 34 ist vorzugsweise an einem ersten axialen Ende der Blaskammer 32 angeordnet. Am entgegengesetzten axialen Ende weist die Blaskammer 32 eine Öffnung 36 auf, deren Querschnitt jenem des ersten Anschlusses 14 entspricht. Zum Reinigen einer Filteranordnung 12 wird diese mit dem ersten Flansch 22 auf die Blaskammer 32 aufgesetzt, wobei eine Dichtung 38 vorzugsweise zwischengelegt wird. Anschließend wird der erste Flansch 22 über eine schematisch angedeutete Flanschverbindung 40 mit der Blaskammer 32 verbunden, und zwar insbesondere auf fluiddichte Art und Weise.

Der Querschnitt der Blaskammer 32 ist benachbart zu der Filteranordnung 12 vorzugsweise identisch oder im Wesentlichen gleich jenem der Filteranordnung 12.

Die Blaskammer 32 weist ferner einen Flüssigkeitsanschluss 42 auf, über den eine Flüssigkeit in die Blaskammer 32 eingefüllt werden kann. Der Flüssigkeitsanschluss 42 ist über eine Flüssigkeitsventil 46 mit einer Flüssigkeitsquelle 44 verbunden, so dass nach Bedarf Flüssigkeit 48 in die Blaskammer 32 eingefüllt werden kann.

In Fig. 1 ist gezeigt, dass die Blaskammer zum Durchführen eines erfindungsgemäßen Reinigungsverfahrens mit Flüssigkeit 48 so gefüllt ist, dass ein Flüssigkeitsniveau 50 in der Blaskammer 32 unterhalb des ersten Anschlusses 14 der Filteranordnung 12 liegt, dazwischen also ein Abstand 52 eingerichtet ist. In anderen Ausführungsformen kann die Blaskammer 32 jedoch auch vollständig gefüllt sein. Bevorzugt ist es jedoch, wenn die Blaskammer 32 nicht vollständig mit Flüssigkeit 48 gefüllt ist.

Der Gasanschluss 34 ist über einen schnell zu öffnenden Gashahn 56 mit einer Druckgasquelle 58 verbunden, die beispielsweise als Druckgasspeicher ausgebildet sein kann. Der Druckgasspeicher beinhaltet vorzugsweise unter Druck stehendes Gas, wobei der Druck in dem Druckgasspeicher vorzugsweise in einem Bereich zwischen 4 bar und 12 bar liegt, insbesondere in einem Bereich zwischen 6 bar und 10 bar.

Wie es nachfolgend noch im Detail erläutert wird, wird zum Durchführen des erfindungsgemäßen Reinigungsverfahrens nach dem Befüllen der Blaskammer 32 mit der Flüssigkeit 48 ein Reinigungsimpuls erzeugt, bei dem Gas 60 unter Druck über den Gasanschluss 34 in die Blaskammer 32 geleitet wird, und zwar für eine erste Zeitdauer, die kleiner ist als 5 s, insbesondere kleiner ist als 3 s, und insbesondere kleiner ist als 2 s. Die Zeitdauer bezieht sich hierbei auf die Zeit, während der der Gashahn 56 teilweise oder vollständig geöffnet ist. Das in die Blaskammer 32 einströmende Gas verwirbelt die darin enthaltene Flüssigkeit 48, um ein Gas-Flüssigkeitsgemisch zu erzeugen, das aufgrund des Druckes über den ersten Fluidanschluss 14 durch die Filtereinrichtung 20 hindurch und aus dem zweiten Fluidanschluss 16 heraus getrieben wird, wie es in Fig. 1 schematisch bei 62 dargestellt ist.

Etwaige in der Filtereinrichtung 20 an der Filterstruktur anhaftende Partikel werden dabei mitgerissen und befinden sich in dem aus dem zweiten Fluidanschluss 16 heraus getriebenen Gas-Flüssigkeitsgemisch, wie es in Fig. 1 schematisch bei 64 angedeutet ist.

Der Druckluftspeicher kann beispielsweise ein Volumen in einem Bereich von 1 m³ bis 5 m³ haben. Dieses Volumen bezieht sich auf das Gas im unter Druck stehenden Zustand. Bei einem Druck von beispielsweise 8 bar und einem Volumen von 2 m³ in dem Druckgasspeicher könnte das Volumen im entspannten Zustand beispielsweise 16 m³ betragen.

Der Querschnittsdurchmesser des Gasanschlusses 34 kann beispielsweise im Bereich zwischen 1 cm und 10 cm liegen.

Für einen Reinigungsimpuls wird ein Gasvolumen verwendet, das drucklos vorzugsweise im Bereich zwischen 0,5 m³ bis 4 m³ liegt, bezogen auf die Reinigung einer Filteranordnung 12 für Nutzfahrzeuge. Das Volumen der in die Blaskammer 32 eingefüllten Flüssigkeit 48 kann beispielsweise im Bereich zwischen 2 l und 12 l liegen, insbesondere im Bereich von 3 l bis 8 l.

Ein Reinigungsimpuls der oben beschriebenen Art, bei dem jeweils die Blaskammer 32 mit Flüssigkeit 48 zumindest teilweise befüllt wird und jeweils ein Gasdruckstoß nach der Art eines Impulses in die Blaskammer 32 eingeleitet wird, wird entweder einmal durchgeführt, kann jedoch auch zweimal oder auch mehrfach wiederholt werden.

Anschließend wird vorzugsweise ein Trocknungsimpuls durchgeführt, bei dem keine Flüssigkeit in die Blaskammer eingeführt wird und nur Gas impulsartig durch die Filteranordnung 12 getrieben wird. Das bei dem Trocknungsimpuls verwendete Volumen an Gas ist vorzugsweise größer als jenes, das zum Reinigungsimpuls verwendet wird, beispielsweise in einem Bereich von 1 m³ bis 10 m³. Ferner ist die Zeitdauer, für die Gas während des Trocknungsimpulses in die Blaskammer geleitet wird, eine zweite Zeitdauer, die größer ist als die erste Zeitdauer und vorzugsweise in einem Bereich von 1 s bis 5 s liegt.

Im Anschluss an den Trocknungsimpuls kann dieser ebenfalls bedarfsweise wiederholt werden. Anschließend wird die Filteranordnung 12 vorzugsweise von der Blaskammer 32 abmontiert und in einem Ofen getrocknet, bis keine Flüssigkeit mehr in der Filtereinrichtung 20 enthalten ist. Der Ofen kann beispielsweise ein Durchlaufofen sein, wie es nachstehend noch beschrieben ist, kann jedoch auch ein Ofen sein, der im Batch-Betrieb arbeitet.

In den nachfolgenden Figuren 2 bis 7 weitere Ausführungsformen von Filterreinigungsvorrichtungen 10 gezeigt, die jeweils zum Durchführen des erfindungsgemäßen Filterreinigungsverfahrens geeignet sind und hinsichtlich Aufbau und Funktionsweise generell der Filterreinigungsvorrichtung 10 der Fig. 1 entsprechen. Gleiche Elemente sind daher durch gleiche Bezugszeichen gekennzeichnet.

Fig. 2 zeigt eine Filterreinigungsvorrichtung 10', bei der der zweite Fluidanschluss 16 mit einer Auffangkammer 70 verbunden ist. Die Auffangkammer 70 ist so ausgebildet, dass dem ausgestoßenen Gas-Flüssigkeitsgemisch 62 im Wesentlichen kein oder nur ein geringer Widerstand entgegengesetzt wird, um ein weitgehend freies Ausblasen der Filteranordnung 12 gewährleisten zu können. Demzufolge kann das Volumen der Auffangkammer 70 beispielsweise in einem Bereich liegen, der jenem des bei dem Reinigungsimpuls oder bei dem Trocknungsimpuls verwendeten Gasvolumens entspricht. Ferner kann die Auffangkammer 70 eine Einrichtung aufweisen, um zu erreichen, dass das ausgestoßene Gas-Flüssigkeitsgemisch 62 nicht wieder auf den zweiten Fluidanschluss 16 zurückfällt. Zu diesem Zweck kann die Auffangkammer 70 einen Wandabschnitt 72 aufweisen, der gegenüber der Längsachse 18 geneigt ist, so dass das Gas-Flüssigkeitsgemisch 62 seitlich abgelenkt wird und dann schließlich im Bereich eines Umlenkwandabschnittes 74 in einen Auffangabschnitt 76 umgelenkt wird, so dass der erste Wandabschnitt 72 und der Umlenkwandabschnitt 74 eine Art "Siphon"-Funktion bilden.

In dem Auffangabschnitt 76 kann das Gas-Flüssigkeitsgemisch aufgefangen und gesammelt werden, um anschließend einer geeigneten Nachbereitung unterzogen zu werden.

Die Auffangkammer 70 kann ein Abblasventil 78 beinhalten, das dafür sorgt, dass in der Auffangkammer 70 enthaltenes Gas während des Reinigungsimpulses und während des Trocknungsimpulses ausgestoßen wird, wie es in Fig. 2 durch einen Pfeil bei 78 angedeutet ist.

Ferner kann in der Auffangkammer 70 ein Tropfenabscheider 80 angeordnet sein, wie er in Fig. 2 schematisch angedeutet ist, mittels dessen die aufgefangene Flüssigkeit 82 abgeschieden und gesammelt werden kann, um beispielsweise über einen Fluidanschluss 84 abgeführt zu werden.

In manchen Fällen kann die Auffangkammer 70 auch eine Expansionsblase 86 beinhalten, die es ermöglicht, das Volumen der Auffangkammer 70 bedarfsweise schnell zu erhöhen, wie es in Fig. 2 schematisch angedeutet ist.

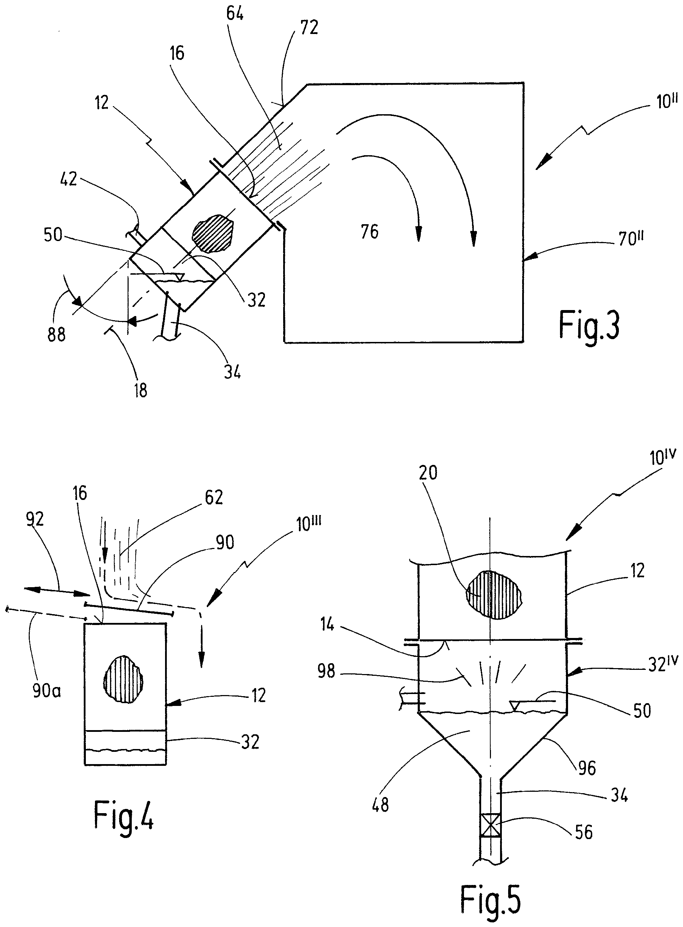

In Fig. 3 ist eine weitere Ausführungsform einer Fluidreinigungsvorrichtung 10" gezeigt, bei der die Filteranordnung 12 so an der Blaskammer 32 montiert wird, dass eine Längsachse 18 der Filteranordnung 12 um einen Winkel 88 gegenüber der Vertikalen geneigt ist, der in diesem Fall vorzugsweise in einem Bereich zwischen 20° und 80° liegen kann, insbesondere in einem Bereich zwischen 20° und 60°. Hierdurch kann der erste Wandabschnitt 72, der sich an den zweiten Fluidanschluss 16 anschließt, parallel zur Längsachse 18 ausgerichtet werden, so dass der Widerstand, der dem Gas-Flüssigkeitsgemisch 62 entgegengesetzt wird, verringert werden kann. Aufgrund der Schrägstellung der Filteranordnung 12 kann ebenfalls verhindert werden, dass das Gas-Flüssigkeitsgemisch 62 wieder auf den zweiten Fluidanschluss 16 zurückgelangt. In der in Fig. 3 gezeigten Auffangkammer 70" kann ebenfalls ein Tropfenabscheider 80 oder dergleichen angeordnet sein. Die Auffangkammer 70" kann auch in anderen Aspekten ähnlich aufgebaut sein wie die Auffangkammer 70 der Fig. 2.

In Fig. 4 ist eine weitere Einrichtung gezeigt, um ein Zurückströmen von dem Gas-Flüssigkeitsgemisch 62 auf den zweiten Fluidanschluss 16 zu verhindern. Hierzu wird eine mechanisch bewegliche Klappe 90 verwendet, die zwischen einer Freigabeposition 90a, in der das Gas-Flüssigkeitsgemisch 62 ungehindert aus dem zweiten Anschluss 16 austreten kann, und einer Abscheidungsposition 90 bewegbar ist, wie es bei 92 gezeigt ist. In der Abscheidungsposition 90 fällt das ausgestoßene Gas-Flüssigkeitsgemisch 62 auf die Oberseite der Klappe 90 und kann dann seitlich abströmen, wie es in Fig. 4 schematisch angedeutet ist.

Fig. 5 zeigt eine weitere Fluidreinigungsvorrichtung 10^{IV}, bei der die Blaskammer 32^{IV} ausgehend von dem Gasanschluss 34 hin zu dem ersten Fluidanschluss 14 einen Konusabschnitt 96 beinhaltet. Mit dieser Maßnahme kann in manchen Ausführungsformen eine noch gleichmäßigere Verteilung des Eindringens des Gas-Flüssigkeitsgemisches 62 über den Querschnitt des ersten Fluidanschlusses 14 erreicht werden. Zu diesem Zweck können, wie es in Fig. 5 schematisch angedeutet ist, in der Blaskammer auch Leitbleche 98 angeordnet sein. In manchen Varianten können derartige Leitbleche oberhalb des Flüssigkeitsniveaus 50 liegen, in anderen darunter. In manchen Varianten sind derartige Leitbleche 98 auch gar nicht notwendig.

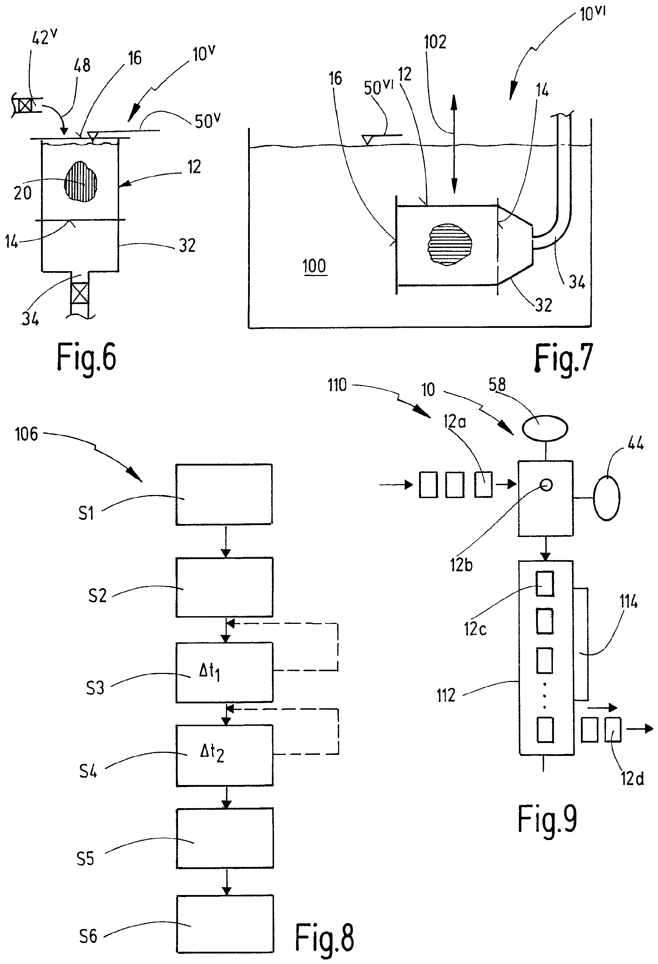

Fig. 6 zeigt eine weitere Filterreinigungsvorrichtung 10^{V}, bei der ein Flüssigkeitsanschluss 42^{V} so angeordnet ist, dass Flüssigkeit 48 nicht nur in die Blaskammer 32 gefüllt wird, sondern auch in die darüber angeordnete Filteranordnung 12, derart, dass das Flüssigkeitsniveau 50^{V} im Bereich der Filtereinrichtung 20 liegt.

Fig. 7 zeigt eine Fluidreinigungsvorrichtung 10^{VI}, bei der eine Filteranordnung 12 zur Durchführung des Reinigungsimpulses in ein Flüssigkeitsbad 100 abgesenkt wird, und zwar mittels einer Hebeeinrichtung 102, wie es in Fig. 7 schematisch angedeutet ist.

Hierbei werden die Filteranordnung 12 und die Blaskammer 32 vollständig mit Flüssigkeit gefüllt, bevor der Reinigungsimpuls über den Gasanschluss 34 durchgeführt wird. Das aus dem zweiten Fluidanschluss 16 austretende Gas-Flüssigkeitsgemisch vermischt sich dann unmittelbar mit der in dem Flüssigkeitsbad 100 enthaltenen Flüssigkeit. Es versteht sich, dass die Flüssigkeit in dem Bad regelmäßig ausgetauscht wird und/oder gereinigt wird.

In Fig. 8 ist in schematischer Form ein Flussdiagramm des erfindungsgemäßen Verfahrens gezeigt, und zwar bei 106.

In einem ersten Schritt S1 wird eine Filteranordnung 12 mit ihrem ersten Fluidanschluss 14 an einer Blaskammer 32 montiert, vorzugsweise fluiddicht. In einem zweiten Schritt S2 wird in die Blaskammer 32 eine Flüssigkeit eingefüllt.

In einem nächsten Schritt S3 wird ein Reinigungsimpuls durchgeführt, und zwar für eine erste Zeitdauer Δt₁. Dieser Schritt S3 kann nach Bedarf wiederholt werden, wie es durch eine gestrichelte Linie angedeutet ist.

Im Anschluss an den Reinigungsimpuls oder die Reinigungsimpulse wird im Schritt S4 wenigstens ein Trocknungsimpuls durchgeführt, und zwar für eine zweite Zeitdauer Δt₂. Auch der Trocknungsimpuls kann ggf. wiederholt werden, wie es in Fig. 8 schematisch angedeutet ist.

Nach Durchführen von einem oder mehreren Trocknungsimpulsen erfolgt im Schritt S5 eine Demontage der Filteranordnung 12 von der Blaskammer 32, und die Filteranordnung 12 wird anschließend in einem Ofen getrocknet (Schritt S6).

Fig. 9 zeigt in einer schematischen Draufsicht ein Layout für eine Reinigungsanlage 110, bei der Filteranordnungen 12a vereinzelt der Filterreinigungsvorrichtung 10 zugeführt werden und dann, wenn sie montiert sind (bei 12b gezeigt), einem Reinigungsimpuls und optional einem Trocknungsimpuls unterzogen werden. Die dann hiernach von der Filterreinigungsvorrichtung 10 demontierten Filteranordnungen 12c werden in einen Ofen versetzt, der vorzugsweise als Durchlaufofen ausgebildet ist, so dass die Filteranordnungen 12c an einem axialen Ende auf ein Förderband aufgegeben werden, dann den Durchlaufofen 12 durchlaufen, bei dem sie mittels einer Heizeinrichtung 114 erwärmt werden, um eine finale Trocknung durchzuführen. Am anderen axialen Ende des Durchlaufofens 112 werden die dann fertiggereinigten und getrockneten Filteranordnungen 12d entnommen, wie es in Fig. 9 schematisch angedeutet ist.

## Patentansprüche

1. Verfahren zum Reinigen einer Filteranordnung (12), die einen ersten Fluidanschluss (14), einen zweiten Fluidanschluss (16) und eine Filtereinrichtung (20) aufweist, die zwischen dem ersten und dem zweiten Fluidanschluss (16, 18) angeordnet ist und eine Oberfläche hat, an der Verunreinigungen (64) anhaften können, wobei das Verfahren die Schritte aufweist:
- Verbinden des ersten Fluidanschlusses (14) mit einer Blaskammer (32), die einen Gasanschluss (34) aufweist, derart, dass die Filtereinrichtung (20) in vertikaler Richtung wenigstens teilweise über der Blaskammer (32) angeordnet ist,
- zumindest teilweises Befüllen der Blaskammer (32) mit einer Flüssigkeit (48), wobei die Flüssigkeit alleine aufgrund von Gravitationskräften in der Blaskammer (32) verbleibt, und
- Erzeugen eines Reinigungsimpulses (S3), bei dem Gas (60) unter Druck über den Gasanschluss (34) in die Blaskammer (32) geleitet und durch die darin enthaltene Flüssigkeit (48) hindurchgeführt wird, und zwar für eine erste Zeitdauer (Δt₁), die kleiner ist als 5 Sekunden, so dass ein Gas-Flüssigkeitsgemisch (62) über den ersten Fluidanschluss (14) durch die Filtereinrichtung (20) hindurch und aus dem zweiten Fluidanschluss (16) heraus getrieben wird, wobei der zweite Fluidanschluss (16) offen ist, so dass das aus dem zweiten Fluidanschluss (16) austretende Gas-Flüssigkeitsgemisch (62) im Wesentlichen ungehindert aus der Filtereinrichtung (20) austreten kann.

2. Verfahren nach Anspruch 1, wobei der zweite Fluidanschluss (16) offen ist oder mit einer Auffangkammer (70) verbunden ist, deren Volumen größer ist als ein Volumen der Blaskammer (32).

3. Verfahren nach Anspruch 1 oder 2, wobei ein Verhältnis zwischen einem Gasvolumen des bei dem Reinigungsimpuls (S3) verwendeten Gases (60) und einem Flüssigkeitsvolumen der bei dem Reinigungsimpuls verwendeten Flüssigkeit (48) in einem Bereich zwischen 20:1 und 4000:1 liegt.

4. Verfahren nach einem der Ansprüche 1 - 3, wobei der Gasanschluss (34) der Blaskammer (32) über eine schnell öffnende Gasventil- oder Gashahneinrichtung (56) mit einer Druckgasquelle (58) verbunden ist.

5. Verfahren nach einem der Ansprüche 1 - 4, wobei der Reinigungsimpuls (S3) nacheinander 1 bis 4 mal durchgeführt wird.

6. Verfahren nach einem der Ansprüche 1 - 5, wobei nach dem Reinigungsimpuls (S3) oder nach den Reinigungsimpulsen wenigstens ein Trocknungsimpuls (S4) erzeugt wird, wobei Gas (60) unter Duck in die Filtereinrichtung (20) geleitet wird, und zwar für eine zweite Zeitdauer (Δt₂), die kleiner ist als 10 Sekunden, so dass das Gas durch die Filtereinrichtung hindurch getrieben wird.

7. Verfahren nach Anspruch 6, wobei der Trocknungsimpuls (S4) nacheinander 1 bis 6 mal durchgeführt wird.

8. Verfahren nach einem der Ansprüche 1 - 7, wobei die Filteranordnung (12) nach dem Reinigen in einem Ofen (112) getrocknet wird (S6).

9. Verfahren nach einem der Ansprüche 1 - 8, **dadurch gekennzeichnet, dass** das mit gelösten Verunreinigungen (64) verunreinigte Gas-Flüssigkeitsgemisch (62) in einer Auffangkammer (70) aufgefangen wird.

10. Verfahren nach Anspruch 9, wobei die Auffangkammer (64) eine Abscheidungseinrichtung aufweist, die dazu ausgebildet ist, ein Zurückströmen des verunreinigten Gas-Flüssigkeitsgemisches (62) in die Filtereinrichtung (20) hinein zu verringern.

11. Verfahren nach einem der Ansprüche 1 - 10, wobei die Blaskammer vor dem Erzeugen des Reinigungsimpulses (S3) mit Flüssigkeit (48) so gefüllt wird, dass ein Flüssigkeitsniveau (50) in der Blaskammer (52) unterhalb des ersten Fluidanschlusses (14) der Filteranordnung (12) liegt.

## Claims

1. Method for cleaning a filter arrangement (12) which has a first fluid connector (14), a second fluid connector (16) and a filter device (20) which is arranged between the first and second fluid connectors (16, 18) and which has a surface to which contaminants (64) can adhere, the method having the following steps:
- connecting the first fluid connector (14) to a blowing chamber (32) which has a gas connector (34), such that the filter arrangement (20) is, in a vertical direction, arranged at least partially above the blowing chamber (32),
- at least partially filling the blowing chamber (32) with a liquid (48), wherein the liquid remains in the blowing chamber (32) owing solely to gravitational forces, and
- generating a cleaning pulse (S3), in which gas (60) is conducted under pressure via the gas connector (34) into the blowing chamber (32), and through the liquid (48) contained therein, specifically for a first time duration (Δt₁) which is shorter than 5 seconds, such that a gas-liquid mixture (62) is forced via the first fluid connector (14) through the filter device (20) and out of the second fluid connector (16), wherein the second fluid connector (16) is open, such that the gas-liquid mixture (62) emerging from the second fluid connector (16) can emerge from the filter device (20) in substantially unimpeded fashion.

2. Method according to Claim 1, wherein the second fluid connector (16) is open or is connected to a collecting chamber (70), the volume of which is larger than a volume of the blowing chamber (32).

3. Method according to Claim 1 or 2, wherein a ratio between a gas volume of the gas (60) that is used in the cleaning pulse (S3) and a liquid volume of the liquid (48) that is used in the cleaning pulse lies in a range between 20:1 and 4000:1.

4. Method according to one of Claims 1 to 3, wherein the gas connector (34) of the blowing chamber (32) is connected by way of a fast-opening gas valve or gas cock device (56) to a pressurized-gas source (58).

5. Method according to one of Claims 1 to 4, wherein the cleaning pulse (S3) is performed 1 to 4 times in succession.

6. Method according to one of Claims 1 to 5, wherein, after the cleaning pulse (S3) or after the cleaning pulses, at least one drying pulse (S4) is generated, wherein gas (60) is conducted under pressure into the filter device (20), specifically for a second time duration (Δt₂) which is shorter than 10 seconds, such that the gas is forced through the filter device.

7. Method according to Claim 6, wherein the drying pulse (S4) is performed 1 to 6 times in succession.

8. Method according to one of Claims 1 to 7, wherein the filter arrangement (12) is dried (S6) in a furnace (112) after the cleaning process.

9. Method according to one of Claims 1 to 9, **characterized in that** the gas-liquid mixture (62) contaminated with released contaminants (64) is captured in a capture chamber (70).

10. Method according to Claim 9, wherein the capture chamber (64) has a separation device which is designed to prevent a backflow of the contaminated gas-liquid mixture (62) into the filter device (20).

11. Method according to one of claims 1 to 10, wherein, before generating the cleaning pulse (S3), the blowing chamber is filled with liquid (48) such that a liquid level (50) in the blowing chamber (32) lies below the first fluid connector (14) of the filter arrangement (12).

## Revendications

1. Procédé de nettoyage d'un agencement de filtre (12) qui présente un premier raccord fluidique (14), un deuxième raccord fluidique (16) et un dispositif de filtre (20) qui est disposé entre le premier et le deuxième raccord fluidique (16, 18) et qui présente une surface au niveau de laquelle des impuretés (64) peuvent adhérer, le procédé présentant les étapes suivantes :
- raccordement du premier raccord fluidique (14) à une chambre de soufflage (32) qui présente un raccord de gaz (34) de telle sorte que le dispositif de filtre (20) soit disposé dans la direction verticale au moins en partie au-dessus de la chambre de soufflage (32),
- remplissage au moins partiel de la chambre de soufflage (32) avec un liquide (48), le liquide restant dans la chambre de soufflage (32) uniquement du fait des forces de gravité, et
- génération d'une impulsion de nettoyage (S3) lors de laquelle du gaz sous pression (60) est guidé par le biais du raccord de gaz (34) dans la chambre de soufflage (32) et est guidé à travers le liquide (48) contenu dans celle-ci, et ce pendant une première durée (Δt₁) qui est inférieure à 5 secondes, de telle sorte qu'un mélange de gaz et de liquide (62) soit éjecté par le biais du premier raccord de fluide (14) à travers le dispositif de filtre (20) et hors du deuxième raccord de fluide (16), le deuxième raccord de fluide (16) étant ouvert de telle sorte que le mélange de gaz et de liquide (62) sortant du deuxième raccord de fluide (16) puisse sortir essentiellement sans obstruction hors du dispositif de filtre (20).

2. Procédé selon la revendication 1, dans lequel le deuxième raccord de fluide (16) est ouvert ou est raccordé à une chambre de collecte (70) dont le volume est supérieur à un volume de la chambre de soufflage (32).

3. Procédé selon la revendication 1 ou 2, dans lequel un rapport entre un volume de gaz du gaz (60) utilisé lors de l'impulsion de nettoyage (S3) et un volume de liquide du liquide (48) utilisé lors de l'impulsion de nettoyage est compris dans une plage comprise entre 20:1 et 4000:1.

4. Procédé selon l'une quelconque des revendications 1 à 3, dans lequel le raccord de gaz (34) de la chambre de soufflage (32) est raccordé à une source de gaz sous pression (58) par le biais d'un dispositif de soupape de gaz ou de robinet de gaz à ouverture rapide (56).

5. Procédé selon l'une quelconque des revendications 1 à 4, dans lequel l'impulsion de nettoyage (S3) est effectuée successivement 1 à 4 fois.

6. Procédé selon l'une quelconque des revendications 1 à 5, dans lequel après l'impulsion de nettoyage (S3) ou après les impulsions de nettoyage, au moins une impulsion de séchage (S4) est générée, du gaz sous pression (60) étant introduit dans le dispositif de filtre (20), et ce pendant une deuxième durée (Δt₂) qui est inférieure à 10 secondes, de telle sorte que le gaz soit propulsé à travers le dispositif de filtre.

7. Procédé selon la revendication 6, dans lequel l'impulsion de séchage (S4) est effectuée successivement 1 à 6 fois.

8. Procédé selon l'une quelconque des revendications 1 à 7, dans lequel l'agencement de filtre (12), après le nettoyage, est séché (S6) dans un four (112).

9. Procédé selon l'une quelconque des revendications 1 à 8, **caractérisé en ce que** le mélange de gaz et de liquide (62) encrassé avec des impuretés dissoutes (64) est recueilli dans une chambre de collecte (70).

10. Procédé selon la revendication 9, dans lequel la chambre de collecte (64) présente un dispositif de séparation qui est réalisé de manière à réduire un reflux du mélange de gaz et de liquide encrassé (62) dans le dispositif de filtre (20).

11. Procédé selon l'une quelconque des revendications 1 à 10, dans lequel la chambre de soufflage est remplie de liquide (48) avant la génération de l'impulsion de nettoyage (S3) de telle sorte qu'un niveau de liquide (50) dans la chambre de soufflage (52) soit situé en dessous du premier raccord de fluide (14) de l'agencement de filtre (12).
